# EUROPÄISCHE PATENTSCHRIFT

(11) **EP 1 142 143 B1**
(45) Veröffentlichungstag und Bekanntmachung des Hinweises auf die Patenterteilung: **03.08.2005**
(21) Anmeldenummer: 99964388.5
(22) Anmeldetag: 01.12.1999
(51) Int. Cl.: H04B 1/40

(54) **VERFAHREN ZUR ÜBERTRAGUNG VON SIGNALEN IN EINEM KOMMUNIKATIONSGERÄT**
METHOD FOR TRANSMITTING SIGNALS IN A COMMUNICATION DEVICE
PROCEDE DE TRANSMISSION DE SIGNAUX DANS UN APPAREIL DE TELECOMMUNICATIONS

(30) Priorität: 28.12.1998 DE 19860502
(43) Veröffentlichungstag der Anmeldung: 10.10.2001
(73) Patentinhaber: Infineon Technologies AG, 81669 München (DE)
(72) Erfinder: GUNZELMANN, Bertram, D-86163 Augsburg (DE)
(74) Vertreter: Barth, Stephan Manuel, Dr.
(86) Internationale Anmeldenummer: PCT/DE1999/003835
(87) Internationale Veröffentlichungsnummer: WO 2000/039938

(56) Entgegenhaltungen:
- WO-A-95/33350
- DE-A- 3 518 896
- US-A- 5 530 722

## Beschreibung

Die vorliegende Erfindung betrifft ein Verfahren zur Übertragung von Signalen in einem Kommunikationsgerät zwischen einem Basisbandschaltkreis und einem Hochfrequenzschaltkreis.

Die WO 95/33350 offenbart ein derartiges Verfahren, in dem in einem Sendebetrieb aus einem Nachrichtensignal ein erstes Zwischensignal erzeugt und an den Hochfrequenzschaltkreis übertragen wird und in dem in einem Empfangsbetrieb aus einem zweiten Zwischensignal das Nachrichtensignal gewonnen wird, und dem Hochfrequenzschaltkreis, indem im Sendebetrieb das erste Zwischensignal auf eine Sendefrequenz umgesetzt und Empfangsbetrieb aus einem empfangenen Signal das zweite Zwischensignal gewonnen und an den Basisbandschaltkreis übertragen wird, wobei das erste Zwischensignal während erster Zeitabschnitte und das zweite Zwischensignal während zweiter Zeitabschnitte über einen gemeinsamen Übertragungspfad übertragen werden, wobei sich die ersten Zeitabschnitte nicht mit den zweiten Zeitabschnitten überlappen.

Weiterhin ist aus dieser Druckschrift bekannt, dass die Pfade des Hochfrequenzschaltkreises und die Pfade des Basisbandschaltkreises jeweils über einen Bus parallel geschaltet sind und dass die Pfade des Hochfrequenzschaltkreises und des Basisbandschaltkreises über die das zweite Zwischensignal geführt wird, während des Sendebetriebs hochohmig geschaltet werden; und die Pfade des Hochfrequenzschaltkreises und des Basisbandschaltkreises, über die das erste Zwischensignal geführt wird, im Empfangsbetrieb hochohmig geschaltet werden.

Die DE 4238282 A1 offenbart ein Funkgerät mit Umsetzung von Sende- und Empfangssignalen in mindestens einer Zwischenfrequenzlage mit einem Mischer, dessen Nutzung sowohl im Empfangsbetrieb als auch im Sendebetrieb vorgesehen ist, hochfrequenzseitig mit Mitteln zur Entkoppelung von Sende- und Empfangssignalen und zwischenfrequenzseitig mit Mitteln zur Entkoppelung der Sende- und Empfangssignale.

Kommunikationsgeräte dienen zur Aufnahme bzw. Wiedergabe einer Nachricht und zum Senden bzw. Empfangen eines daraus abgeleiteten Nachrichtensignals. Die Nachrichten liegen in der Regel als Sprachinformation oder Daten vor. Mit geeigneten Kommunikationsgeräten kann ein Austausch der Nachrichtensignale untereinander erfolgen. Häufig wird die Verbindung zwischen zwei Kommunikationsgeräten nicht direkt aufgebaut, sondern über eine Zwischenstation, die mehreren Kommunikationsgeräten zugeordnet ist. Diese dient zur Verstärkung der mit den Nachrichtensignalen modulierten Trägersignalen und zu Vermittlungszwecken, wenn von mehreren Teilnehmern eines Kommunikationsnetzes bestimmte Teilnehmer zum Aufbau einer Verbindung ausgewählt werden sollen.

Gängige Kommunikationsgeräte sind beispielsweise Mobiltelefone, die in Kraftfahrzeugen oder auch als Handgeräte zum Einsatz kommen. Bei Mobilfunksystemen hat man sich auf bstimmte Systemstandards geeinigt. Zu den digitalen Mobilfundstandards gehören GSM (Global System for Mobile Communications) und DECT (Digital Enhanced Cordless Telephone).

Der prinzipielle Aufbau eines Kommunikationsgerätes für den Mobilfunk ist aus der Publikation der Siemens Aktiengesellschaft "Ics for Communications, Product Overview 07.96" bekannt. Dort ist auf Seite 13 des Blockschaltbild eines Handmobiltelefons gezeigt. Danach weist ein solches Gerät einen Sendepfad und einen Empfangspfad auf. Im Sendepfad wird die zu übertragende Nachricht von einem Mikrophon aufgenommen, in einem Basisband-Baustein verstärkt und in ein digitales Nachrichtensignal umgewandelt. Dieses wird nach einer Filterung und Codierung einer digitalen Modulation unterzogen. Das modulierte Nachrichtensignal liegt dann im Basisband vor, wo es nach einer Digital-Analog-Umwandlung erneut gefiltert und an einen Transmitter-Baustein übergeben wird, der elektrisch mit dem Basisband-Baustein verbunden ist. Der Transmitter-Baustein setzt das modulierte Nachrichtensignal in die Radiofrequenz um, mit der es über eine Antenne ausgesendet wird.

Im Empfangspfad wird das über die Antenne empfangene Signal in einem Empfangsbaustein demoduliert und in Inphase- und Quadratur-Komponente aufgeteilt. Diese Komponenten werden wiederum über elektrische Verbindungen an den Basisband-Baustein übergeben, wo sie in dem vom Sendepfad unabhängigen Empfangspfad nach Filterung und Analog-Digital-Wandlung dekodiert werden. Das dekodierte Signal wird wieder in ein Analog-Signal umgewandelt und nach Verstärkung einem Lautsprecher zugeführt.

Wie bereits erwähnt wurde, ist der Basisband-Baustein mit dem Transmitter-Baustein und dem Empfangsbaustein elektrisch verbunden. Für den Sende- und Empfangspfad müssen jeweils entsprechende Anschlüsse vorgesehen werden.

Die Aufgabe der vorliegenden Erfindung besteht darin, den Aufwand für die elektrischen Verbindungen zwischen einzelnen Bausteinen in einem Kommunikationsgerät zu verringern.

Gelöst wird diese Aufgabe mit einem Verfahren mit den Merkmalen des Patentanspruches 1.

Erfindungsgemäß ist vorgesehen, das zur Übertragung von Signalen zwischen den Bausteinen in dem Kommunikationsgerät an Stelle eines Sende- und eines Empfangspfades ein gemeinsamer Übertragungspfad verwendet wird. Wechselwirkungen zwischen dem gesendeten und dem empfangenden Nachrichtensignal sind ausgeschlossen, da das Senden und das Empfangen desselben in unterschiedlichen Zeitschlitzen erfolgt.

Die Erfindung hat den Vorteil, daß bei den entsprechenden Schaltkreisen, die über den gemeinsamen Übertragungspfad miteinander verbunden sind, Anschlüsse und somit auch elektrische Verbindungsleitungen eingespart werden. Da weniger Anschlüsse benötigt werden, können die Gehäuse der jeweiligen Schaltkreise mit kleineren, äußeren Abmessungen dimensioniert werden. Bei Verwendung kleiner Schaltkreise lassen sich auch Funktelefone mit geringen Abmessungen herstellen.

Ein weiterer Vorteil besteht darin, daß bei einer verringerten Anzahl von Anschlüssen auch weniger Kontaktstellen, wie beispielsweise Lötstellen, auf einem Träger für die Schaltkreise aufgebracht werden müssen.

Vorzugsweise sieht das Verfahren vor, daß die Teile des Sende- und Empfangspfades, die während eines bestimmten Zeitschlitzes nicht benötigt werden, hochohmig geschaltet werden. Im Sendebetrieb wird der Pfad des Basisband-Schaltkreises, der vom gemeinsamen Übertragungspfad zu der Stufe des Basisband-Schaltkreises führt, bei der aus dem zweiten Zwischensignal das Nachrichtensignal gewonnen wird, nicht benötigt. Dieser Teil wird im Sendebetrieb hochohmig geschaltet, um diese Stufe vom Sendepfad zu trennen.

Entsprechend dazu wird im Empfangsbetrieb der Teil des Sendepfades des Basisband-Schaltkreises hochohmig geschaltet, der zwischen dem gemeinsamen Übertragungspfad und der Stufe, in der aus dem Nachrichtensignal das erste Zwischensignal erzeugt wird, verläuft.

Bei einer standardmäßigen Auslegung der Verbindung zwischen den Schaltkreisen liegen die Zwischensignale mit Inphase- und Quadratur-Komponente vor. Bei getrennt ausgeführtem Sende- und Empfangspfad sind daher jeweils zwei Verbindungsleitungen zwischen dem Basisband-Schaltkreis und dem HochfrequenzSchaltkreis erforderlich. Bei Verwendung des gemeinsamen Ubertragungspfades genügen dafür 2 Verbindungsleitungen. Gemäß dem GSM-Standard sind für die Zwischensignale Inphase- und Quadratur-Komponente vorgesehen. Werden diese in differentieller Form übertragen, benötigt man 4 Verbindungsleitungen für den gemeinsamen Übertragungspfad. Bei getrennt ausgeführtem Sende- und Empfangspfad sind dafür insgesamt 8 Verbindungsleitungen notwendig.

Weitere vorteilhafte Aus- und Weiterbildungen sind in Unteransprüchen gekennzeichnet.

Die Erfindung wird nachfolgend anhand von den in Figuren der Zeichnung dargestellten Ausführungsbeispielen näher erläutert. Entsprechende Elemente sind mit gleichen Bezugszeichen versehen. Es zeigen:
- Figur 1: eine bekannte Anordnung zweier Schaltkreise in einem Kommunikationsgerät,
- Figur 2: eine erste Anordnung zur erfindungsgemäßen Übertragung von Signalen,
- Figur 3: eine zweite Anordnung zur erfindungsgemäßen Übertragung von Signalen und
- Figur 4: eine dritte Anordnung zur erfindungsgemäßen Übertragung von Signalen.

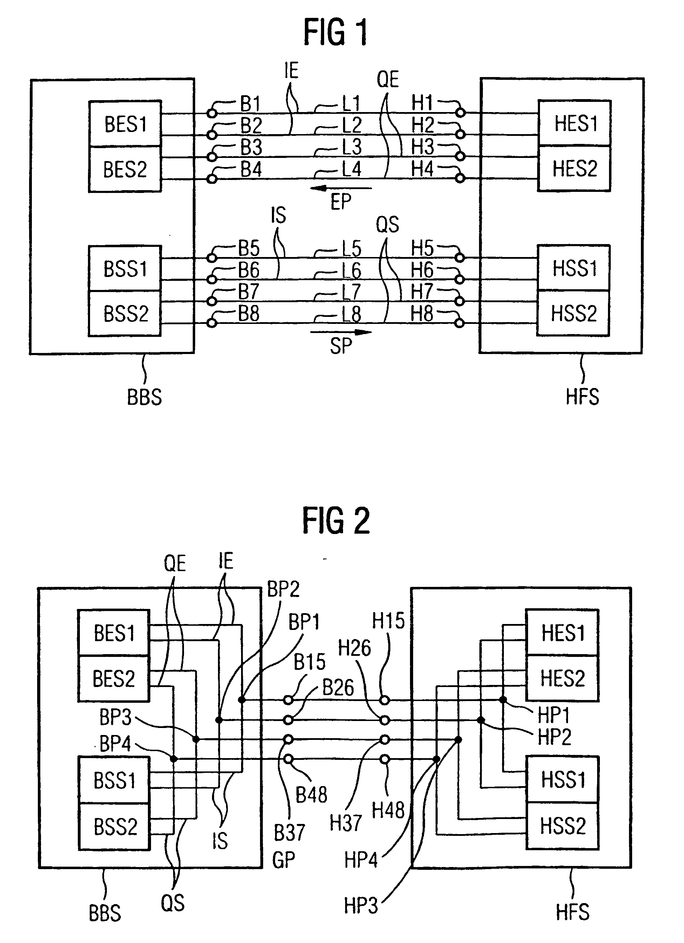

In Figur 1 ist ein Ausschnitt mit zwei Schaltkreisen aus einem bekannten Blockschaltbild eines Mobilfunktelefones dargestellt. Dabei ist ein Basisbandschaltkreis BBS mit seinen Basisbandanschlüssen B1, B2, ..., B8 über Verbindungsleitungen L1, L2, ..., L8 mit Hochfrequenzbandanschlüssen H1, H2,..., H8 eines Hochfrequenzschaltkreises HFS verbunden. Der Basisbandschaltkreis BBS verarbeitet ein Nachrichtensignal NS auf einer Basisbandfrequenzlage. Diese ist um einige Größenordnungen niedriger als eine Hochfrequenzbandlage, wie sie im Hochfrequenzschaltkreis HFS auftritt.

Unter dem Nachrichtensignal NS werden sowohl Signale verstanden, die Nachrichten enthalten, die gesendet werden sollen, als auch solche Signale mit Nachrichten, die über eine Antenne des Mobilfunktelefones empfangen werden. Das Nachrichtensignal NS wird aus Sprache oder zu übermittelnden Daten abgeleitet.

Gemäß Figur 1 enthält der Basisbandschaltkreis BBS eine erste und eine zweite Basisempfangsstufe BES1, BES2, die jeweils über einen Empfangspfad EP mit einer entsprechenden ersten und zweiten Hochfrequenzempfangsstufe HES1, HES2 verbunden sind. Die erste und die zweite Hochfrequenzempfangsstufe HES1, HES2 enthalten beispielsweise Empfangsmischer, mit denen ein über die Antenne (in Figur 1 nicht eingetragen) empfangendes Hochfrequenzsignal auf ein Empfangszwischensignal mit einer Frequenz der Basisbandlage umgesetzt wird. Die erste Hochfrequenzempfangsstufe HES1 erzeugt eine Inphase-Komponente IE, die zweite Hochfrequenzempfangsstufe HES2 eine Quadratur-Komponente QE des Empfangszwischensignals. Die Inphase-Komponente liegt dabei in Phase zu einem Trägersignal, die Quadraturkomponente dagegen senkrecht zur Phase des Trägersignals.

Sowohl die Inphase-Komponente IE als auch die Quadratur-Komponente QE werden als differentielle Signale von der jeweiligen Hochfrequenzempfangsstufe HES1, HES2 aus dem Hochfrequenzschaltkreis HFS zu den Hochfrequenzbandanschlüssen H1 bis H4 herausgeführt. Daher werden für die Inphase-Komponente IE zwei Anschlüsse H1, H2 und für die Quadratur-Komponente QE ebenfalls zwei Anschlüsse H3, H4, benötigt.

Differentielle Signale müssen über zwei Leitungen übertragen werden, da die Information als Potentialdifferenz zwischen den beiden Leitungen vorliegt.

Das Verfahren eignet sich gleichermaßen für differentielle Signale als auch für Signale mit festem Bezugspotential.

Von den Hochfrequenzbandanschlüssen H1 bis H4 wird das Empfangszwischensignal in Form der Komponenten IE und QE über die Verbindungsleitungen L1 bis L4 zu den Basisbandanschlüssen B1 bis B4 übertragen. Die erste und die zweite Basisempfangsstufe BES1, BES2 enthalten beispielsweise Demodulatoren, die aus dem Empfangszwischensignal das Nachrichtensignal gewinnen. Die erste Basisempfangsstufe BES1 demoduliert dabei die Inphase-Komponente IE des Empfangszwischensignals, das über die Basisbandanschlüsse B1, B2 dieser zugeführt wird. Die zweite Basisempfangsstufe BES2 ist mit den Basisbandanschlüssen B3 und B4 verbunden und demoduliert die Quadratur-Komponente QE des Empfangszwischensignals. Die Übertragung des Empfangszwischensignals erfolgt also vom Hochfrequenzschaltkreis HFS in Richtung des Basisbandschaltkreises BBS, über einen Empfangspfad EP

Ein Sendepfad SP ist entgegengesetzt vom Basisbandschaltkreis BBS zum Hochfrequenzschaltkreis HFS gerichtet. Er verbindet eine erste und eine zweite Basissendestufe BSS1, BSS2 mit einer ersten und zweiten Hochfrequenzsendestufe HSS1, HSS2. Die Basissendestufen enthalten beispielsweise einen Modulator, der einen Träger mit der Frequenz der Basisbandlage mit dem Nachrichtensignal NS moduliert. Das Ergebnis der Modulation ist ein Sendezwischensignal, das ebenfalls in einer Inphase-Komponente IS und einer Quadratur-Komponente QS vorliegt. Die erste Basissendestufe BSS1, die mit den Basisbandanschlüssen B5, B6 verbunden ist, erzeugt die Inphase-Komponente IS. Diese wird über Verbindungsleitungen L5, L6 zu den Hochfrequenzbandanschlüssen H5, H6 übertragen. Die Inphase-Komponente IS wird von diesen Anschlüssen zur ersten Hochfrequenzempfangsstufe HES1 weitergeleitet.

Entsprechend erzeugt die zweite Basissendestufe BSS2 eine Quadratur-Komponente QS, die über Basisbandanschlüsse B7, B8, Verbindungsleitungen L7,L8 und Hochfrequenzbandanschlüsse H7, H8 zur zweiten Hochfrequenzsendestufe HSS2 weitergeleitet wird. Die Hochfrequenzsendestufen HSS1, HSS2 enthalten beispielsweise Sendemischer, die das Sendezwischensignal auf eine Frequenz der Hochfrequenzlage, die beim Senden über die Antenne ausgestrahlt wird, umsetzen.

In einem Sendebetrieb wird also das Sendezwischensignal IS, QS über den Sendepfad SP vom Basisschaltkreis BBS zum Hochfrequenzschaltkreis HFS übertragen. In einem Empfangsbetrieb wird das Empfangszwischensignal IE, QE über den Empfangspfad EP von dem Hochfrequenzschaltkreis HFS zum Basisbandschaltkreis BBS übertragen. Auf der Seite des Basisbandschaltkreises BBS und auf der Seite des Hochfrequenzschaltkreises HFS sind jeweils 8 Anschlüsse B1-B8, H1-H8 vorgesehen.

In Figur 2 ist eine Anordnung gezeigt, die einen gemeinsamen Übertragungspfad GP für den Sende- und Empfangsbetrieb verwendet. Die Anordnung nach Figur 2 enthält wie diejenige nach Figur 1 den Basisbandschaltkreis BBS mit den Basisempfangs- und Basissendestufen BES1, BES2, BSS1, BSS2 und den Hochfrequenzschaltkreis HFS mit den Hochfrequenzempfangs- und Hochfrequenzsendestufen HES1, HES2, HSS1, HSS2. Die Basisbandanschlüsse B1 und B5 sind jedoch miteinander verbunden und als ein gemeinsamer Basisbandanschluß B1-5 aus dem Basisbandschaltkreis BBS herausgeführt. Entsprechend ist B2 mit B6 zu einem gemeinsamen Basisbandanschluß B2-6, B3 mit B7 zu einem gemeinsamen Basisbandanschluß B3-7 und B4 mit B8 zu einem gemeinsamen Basisbandanschluß B4-8 zusammengefaßt.

In der gleichen Weise sind beim Hochfrequenzschaltkreis HFS die Anschlüsse H1 und H5 zu einem gemeinsamen Hochfrequenzbandanschluß H1-5, H2 und H6 zu einem gemeinsamen Hochfrequenzbandanschluß H2-6, H3 und H7 zu einem gemeinsamen Hochfrequenzbandanschluß H3-7 und H4 mit H8 zu einem gemeinsamen Hochfrequenzbandanschluß H4-8 zusammengefaßt. Die gemeinsamen Hochfrequenzbandanschlüsse H1-4 bis H4-8 sind aus dem Hochfrequenzschaltkreis HFS nach außen herausgeführt. Die Basisbandanschlüsse B1-5 bis B4-8 sind über die Verbindungsleitungen L1 bis L4 mit den jeweils entsprechenden Hochfrequenzbandanschlüssen H1-5 bis H4-8 verbunden. Sende- und Empfangspfad sind im Gegensatz zu der Anordnung nach Figur 1 nicht getrennt, sondern führen teilweise über den gemeinsamen Übertragungspfad GP.

Das Sendezwischensignal IS, QS wird von den Basissendestufen BSS1, BSS2 über Basisbandverzweigungspunkte BP1 bis BP4 zu den gemeinsamen Basisbandanschlüssen B1-5 bis B4-8 geführt. Der Basisbandanschluß B1-5 ist mit dem Basisbandverzweigungspunkt B4-1 verbunden. Entsprechend sind B2-6, B3-7 und B4-8 mit BP2, BP3 und BP4 verbunden. Von den Basisbandanschlüssen B1-5 bis B4-8 wird das Sendezwischensignal IS,QS über die Verbindungsleitungen L1-L4 zu den gemeinsamen Hochfrequenzbandanschlüssen H1-5 bis H4-8 übertragen. Die Anschlüsse H1-5 bis H4-8 sind jeweils mit einem Hochfrequenzbandverzweigungspunkt HP1, HP2, HP3 und HP4 verbunden. Von den Hochfrequenzbandverzweigungspunkten wird das Sendezwischensignal IS, QS zu den Hochfrequenzsendestufen HSS1, HSS2 weitergeleitet.

Damit das Sendezwischensignal IS, QS nicht über die Basisbandverzweigungspunkte zu den Basisempfangsstufen oder über die Hochfrequenzbandverzweigungspunkte zu den Hochfrequenzempfangsstufen gelangt, werden während des Sendebetriebs die Eingänge der Basisempfangsstufen und die Eingänge der Hochfrequenzempfangsstufen hochohmig geschaltet.

Dagegen werden während des Empfangsbetriebs die Basissendestufen und die Hochfrequenzsendestufen hochohmig geschaltet. Im Empfangsbetrieb wird das Empfangszwischensignal IE, QE von den Hochfrequenzempfangsstufen über die Hochfrequenzbandverzweigungspunkte zu den gemeinsamen Hochfrequenzbandanschlüssen geführt. Von dort wird es über die Verbindungsleitungen L1-L4 und über die gemeinsamen Basisbandanschlüsse zu den Basisbandverzweigungspunkten weitergeleitet und schließlich zu den Basisempfangsstufen geführt.

Das Empfangszwischensignal IE, QE und das Sendezwischensignal IS, QS werden dabei zu unterschiedlichen Zeitabschnitten übertragen. In einem Zeitabschnitt ZAE, in der das Empfangszwischensignal übertragen wird, wird vom Basisbandschaltkreis BBS kein Sendezwischensignal an die Basisbandverzweigungspunkte BP1 bis BP4 weitergegeben. In einem Zeitabschnitt ZAS, in dem das Sendezwischensignal übertragen wird, wird vom Hochfrequenzschaltkreis HFS kein Empfangszwischensignal an die Hochfrequenzbandverzweigungspunkte HP1 bis HP4 weitergeleitet. Die Zeitabschnitte ZAE und ZAS können unterschiedliche Zeitdauer aufweisen, dürfen sich aber nicht überlappen. Der Zeitabschnitt ZAE für das Empfangszwischensignal darf erst beginnen, wenn der betreffende Zeitabschnitt ZAS für das Sendezwischensignal beendet ist.

Der gemeinsame Übertragungspfad EP reicht von den Basisbandverzweigungspunkten BP1 bis BP4 zu den Hochfrequenzbandverzweigungspunkten HP1 bis HP4.

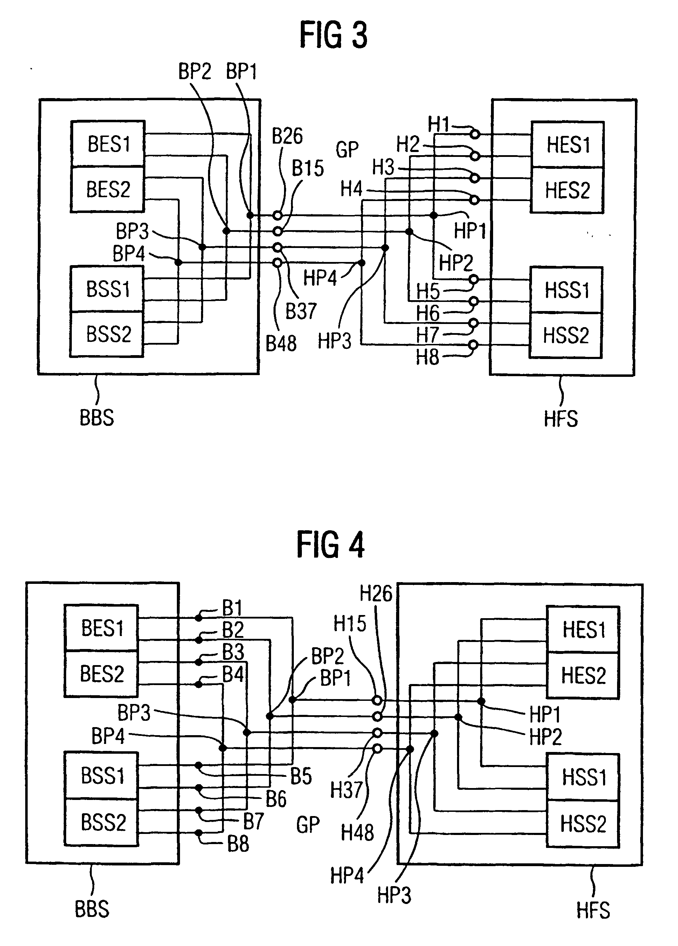

Figur 3 zeigt eine weitere Anordnung zur erfindungsgemäßen Übertragung des Empfangs- und Sendezwischensignals. Der Basisbandschaltkreis BBS ist dort in gleicher Weise ausgeführt wie der Basisbandschaltkreis BBS in Figur 2. Die gemeinsamen Basisbandanschlüsse B1-5 bis B4-8 sind ebenfalls aus dem Kreis herausgeführt. Die Basisbandverzweigungspunkte BP1 bis BP4 sind innerhalb des Basisbandschaltkreises BBS angeordnet.

Der Hochfrequenzschaltkreis HFS nach Figur 3 stimmt mit demjenigen der Figur 1 überein. Die Hochfrequenzbandanschlüsse H1 bis H8 liegen außerhalb des Hochfrequenzschaltkreises. Die Verbindung der Hochfrequenzbandanschlüsse H1 bis H4 mit den entsprechenden Hochfrequenzbandanschlüssen H5 bis H8 erfolgt außerhalb des Hochfrequenzschaltkreises HFS. Auch die Hochfrequenzbandverzweigungspunkte HP1 bis HP4 sind außerhalb des Hochfrequenzschaltkreises angeordnet. Sie sind ebenfalls mit den entsprechenden Basisbandverzweigungspunkten BP1 bis BP4 des Basisbandschaltkreises BBS verbunden.

Gegenüber der Anordnung nach Figur 1 werden die Basisbandanschlüsse B5 bis B8 eingespart. Der Vorteil dieser Anordnung besteht darin, daß der Hochfrequenzschaltkreis selbst nicht verändert werden muß, um das Verfahren durchzuführen. Die Parallelschaltung der Hochfrequenzbandanschlüsse erfolgt außerhalb, so daß bereits erhältliche Hochfrequenzschaltkreise unverändert benutzt werden können.
Die Übertragung des Empfangszwischensignals IE, QE und des Sendezwischensignals IS, QS erfolgt in der gleichen Weise, wie es bei Figur 2 erläutert wurde. Der Zeitabschnitt ZAE, in dem das Empfangszwischensignal übertragen wird, weist keine Überlappung mit dem Zeitabschnitt ZAS, in dem das Sendezwischensignal übertragen wird, auf.

Bei der Anordnung zur erfindungsgemäßen Übertragung des Empfangs- und Sendezwischensignals nach Figur 4 ist der Hochfrequenzschaltkreis HFS wie derjenige in Figur 2 ausgeführt. Die gemeinsamen Hochfrequenzbandanschlüsse H1-5 bis H4-8 sind ebenfalls aus dem Kreis herausgeführt. Die Hochfrequenzbandverzweigungspunkte HP1 bis HP4 sind innerhalb des Hochfrequenzbandschaltkreises HFS angeordnet.

Der Basisbandschaltkreis BBS nach Figur 4 stimmt mit demjenigen der Figur 1 überein. Die Basisbandbandanschlüsse B1 bis B8 liegen außerhalb des Basisbandschaltkreises. Die Verbindung der Basisbandbandanschlüsse B1 bis B4 mit den entsprechenden Basisbandbandanschlüssen B5 bis B8 erfolgt außerhalb des Basisbandschaltkreises BBS. Auch die Basisbandverzweigungspunkte BP1 bis BP4 sind außerhalb des Basisbandschaltkreises angeordnet. Sie sind ebenfalls mit den entsprechenden Hochfrequenzverzweigungspunkten HP1 bis HP4 des Hochfrequenzschaltkreises HFS verbunden.

Gegenüber der Anordnung nach Figur 1 werden die Hochfrequenzbandanschlüsse H5 bis H8 eingespart. Der Vorteil dieser Anordnung besteht darin, daß der Basisbandschaltkreis selbst nicht verändert werden muß, um das Verfahren durchzuführen. Die Parallelschaltung der Basisbandanschlüsse erfolgt außerhalb, so daß bereits erhältliche Basisbandschaltkreise unverändert benutzt werden können.
Die Übertragung des Empfangszwischensignals IE, QE und des Sendezwischensignals IS, QS erfolgt in der gleichen Weise, wie es bei Figur 2 erläutert wurde. Der Zeitabschnitt ZAE, in dem das Empfangszwischensignal übertragen wird, weist keine Überlappung mit dem Zeitabschnitt ZAS, in dem das Sendezwischensignal übertragen wird, auf.

## Patentansprüche

1. Verfahren zur Übertragung von Signalen in einem Kommunikationsgerät zwischen einem Basisbandschaltkreis (BBS)und einem Hochfrequenzschaltkreis (HFS), wobei
der Basisbandschaltkreis (BBS) eine erste und zweite Basisempfangsstufe (BES1, BES2) und eine erste und zweite Basissendestufe (BSS1, BSS2) aufweist;
der Hochfrequenzbandschaltkreis (HFS) eine erste und zweite Hochfrequenzempfangsstufe (HES1, HES2) und eine erste und zweite Hochfrequenzsendestufe (HSS1, HSS2) aufweist;
die erste Basisempfangsstufe (BES1) und die erste Basissendestufe (BSS1) und die zweite Basisempfangsstufe (BES2) und die zweite Basissendestufe (BSS2) über jeweilige erste Anschlüsse (BP1-BP4) miteinander verbunden werden;
die erste Hochfrequenzempfangsstufe (HES1) und die erste Hochfrequenzsendestufe (HSS1) und die zweite Hochfrequenzempfangsstufe (HES2) und die zweite Hochfrequenzsendestufe (HSS2) über jeweilige zweite Anschlüsse (HP1-HP4) miteinander verbunden werden;
die ersten Anschlüsse (BP1-BP4) innerhalb des Basisschaltkreises (BBS) vorgesehen werden und als gemeinsame Basisbandanschlüsse (B15, B26, B37, B48) nach aussen geführt werden und/oder die zweiten Anschlüsse (HP1-HP4) innerhalb des Hochfrequenzschaltkreises (HFS) vorgesehen werden und als gemeinsame Hochfrequenzbandanschlüsse (H15, H26, H37, H48) nach aussen geführt werden;
in dem Basisbandschaltkreis (BBS) in einem Sendebetrieb aus einem Nachrichtensignal (NS) ein erstes Zwischenfrequenzsignal (IS, QS) erzeugt wird und an den Hochfrequenzschaltkreis (HFS) übertragen wird und in einem Empfangsbetrieb aus einem zweiten Zwischenfrequenzsignal (IE, QE) das Nachrichtensignal (NS) gewonnen wird,
in dem Hochfrequenzschaltkreis (HFS) im Sendebetrieb das erste Zwischenfrequenzsignal (IS, QS) auf eine Sendefrequenz umgesetzt und im Empfangsbetrieb aus einem empfangenen Signal das zweite Zwischenfrequenzsignal (IE, QE) gewonnen und an den Basisbandschaltkreis (BBS) übertragen wird,
das erste Zwischenfrequenzsignal (IS, QS) während erster Zeitabschnitte (ZAS) und das zweite Zwischenfrequenzsignal (IE, QE) während zweiter Zeitabschnitte (ZAE) über einen jeweiligen gemeinsamen Übertragungspfad (GP) übertragen werden, wobei sich die ersten Zeitabschnitte (ZAS) nicht mit den zweiten Zeitabschnitten (ZAE) überlappen;
wobei der jeweilige gemeinsame Übertragungspfad (GP) einen jeweiligen ersten Anschluss (BP1-BP4) mit einem entsprechenden zweiten Anschluss (HP1-HP4) in Form von jeweils einer Leitung verbindet.

2. Verfahren nach Anspruch 1,
**dadurch gekennzeichnet, dass** das erste und das zweite Zwischensignal (IS, QS; IE, QE) jeweils eine Inphase-Komponente (IS, IE) und eine Quadratur-Komponente (QS, QE) aufweisen.

3. Verfahren nach einem der Ansprüche 1 oder 2,
**dadurch gekennzeichnet, dass** die Anschlüsse (H1,...,H8) des Hochfrequenzschaltkreises (HFS), über die das erste und das zweite Zwischensignal (IS, QS; IE, QE) geführt werden, aus dem Hochfrequenzschaltskreis (HSS) herausgeführt und außerhalb des Hochfrequenzschaltkreises (HSS) parallelgeschaltet werden.

4. Verfahren nach einem der Ansprüche 1 oder 2,
**dadurch gekennzeichnet, dass** die Anschlüsse (B1,...B8) des Basisbandschaltkreises (BBS), über die das erste und das zweite Zwischensignal (IS, QS; IE, QE) geführt werden, aus dem Basisbandschaltkreis (BBS) herausgeführt und außerhalb des Basisbandschaltkreises (BBS) parallelgeschaltet werden.

5. Verfahren nach einem der Ansprüche 1 bis 4,
**dadurch gekennzeichnet, dass** im Hochfrequenzschaltkreis (HFS) das erste Zwischensignal (IS, QS) auf die Sendefrequenz mit mindestens einem Sendemischer (BSS1) umgesetzt und das zweite Zwischensignal (IE, QE) aus dem empfangenen Signal mit mindestens einem Empfangsmischer (HES1), gewonnen wird.

6. Verfahren nach einem der Ansprüche 1 bis 5,
**dadurch gekennzeichnet, dass** im Basisbandschaltkreis (BBS) das erste Zwischensignal (IS, QS) mittels digitaler Modulation erzeugt und das Nachrichtensignal (NS) aus dem zweiten Zwischensignal (IE, QE) mittels digitaler Filterung gewonnen wird.

## Claims

1. A method for transmitting of signals in a communication device between a base band circuit (BBS) and a high frequency circuit (HFS), wherein
said base band circuit (BBS) comprises a first and a second basis reception stage (BES1, BES2) and a first and a second basis transmission stage (BSS1, BSS2);
said high frequency circuit (HFS) comprises a first and a second high frequency reception stage (HES1, HES2) and a first and a second high frequency transmission stage (HSS1, HSS2);
said first basis reception stage (BES1) and said first basis transmission stage (BSS1) and said second basis reception stage (BSS2) are connected via respective first connections (BP1-BP4) with each other;
said first high frequency reception stage (HES1) and said first high frequency transmission stage (HSS1) and said second high frequency reception stage (HES2) and said second high frequency transmission stage (HSS2) are connected via respective second connections (HP1-HP4) with each other;
said first connections (BP1-BP4) are provided inside of the basis circuit (BBS) and are guided outwards as common base band connections (B15, B26, B37, B48) and/or said second connections (HP1-HP4) are provided inside of said high frequency circuit (HFS) and are guided outwards as common high frequency connections (H15, H26, H37, H48);
in a base band circuit (BBS) during a transmission operation a first intermediate frequency signal (IS, QS) is generated out of a message signal (NS) and transmitted to a high frequency circuit (HFS) and during a reception operation a message signal (NS) is extracted out of a second intermediate frequency signal (IE, QE);
in said high frequency circuit (HFS) during a transmission operation said first intermediate frequency signal (IS, QS) is transformed to a transmission frequency and during a reception operation said second intermediate frequency signal (IE, QE) is extracted out of said received signal and transmitted to a base band circuit (BBS);
said first intermediate frequency signal (IS, QS) is transmitted during first periods (ZAS) and said second intermediate frequency signal (IE, QE) is transmitted during second periods (ZAE) via a respective common transmission path (GP), wherein said first periods (ZAS) do not overlap with said second periods (ZAE);
wherein said respective common transmission path (GP) connects a respective first connection (BP1-BP4) with a respective second connection (HP1-HP4) in the form of a line.

2. The method according to claim 1,
**characterised in that** said first and said second intermediate signals (IS, QS; IE, QE) each comprise an inphase component (IS, IE) and a quadrature component (QS, QE).

3. The method according to one of the claims 1 or 2,
**characterised in that** the connections (H1, ..., H8) of said high frequency circuit (HFS) over which said first and said second intermediate signal (IS, QS; IE, QE) are guided, are guided out of said high frequency circuit (HSS) and are connected in parallel outside of said high frequency circuit (HSS).

4. The method according to one of the claims 1 or 2,
**characterised in that** said connections (B1, ... B8) of said base band circuit (BBS) over which said first and the second intermediate signals (IS, QS; IE, QE) are guided, are guided out of said base band circuit (BBS) and are connected in parallel out of said base band circuit (BBS).

5. The method according to one of the claims 1 to 4,
**characterised in that** inside said high frequency circuit (HFS) said first intermediate signal (IS, QS) is transformed to the transmission frequency via at least one transmission mixer (BSS1) and said second intermediate signal (IE, QE) is extracted out of the received signal via at least one reception mixer (HES1).

6. The method according to one of the claims 1 to 5,
**characterised in that** in said base band circuit (BBS) said first intermediate signal (IS, QS) is generated by means of the digital modulation and said message signal (NS) is extracted out of said second intermediate signal (IE, QE) by means of digital filtering.

## Revendications

1. Procédé de transmission de signaux dans un dispositif de communication entre un circuit bande de base (BBS) et un circuit haute fréquence (HFS), dans lequel
le circuit bande de base (BBS) comprend un premier et un deuxième étage de réception de base (BES1, BES2) et un premier et un deuxième étage d'émission de base (BSS1, BSS2) ;
le circuit bande haute fréquence (HFS) comprend un premier et un deuxième étage de réception haute fréquence (HES1, HES2) et un premier et un deuxième étage d'émission haute fréquence (HSS1, HSS2) ;
le premier étage de réception de base (BES1) et le premier étage d'émission de base (BSS1) et le deuxième étage de réception de base (BES2) et le deuxième étage d'émission de base (BSS2) sont reliés ensemble par des premières connexions (BP1-BP4) respectives;
le premier étage de réception haute fréquence (HES1) et le premier étage d'émission haute fréquence (HSS1) et le deuxième étage de réception haute fréquence (HES2) et le deuxième étage d'émission haute fréquence (HSS2) sont reliés ensemble par des deuxièmes connexions (HP1-HP4) respectives ;
les premières connexions (BP1-BP4) sont prévues à l'intérieur du circuit bande de base (BBS) et sont conduites vers l'extérieur comme connexions bande de base communes (B15, B26, B37, B48) et/ou les deuxièmes connexions (HP1-HP4) sont prévues à l'intérieur du circuit haute fréquence (HFS) et sont conduites vers l'extérieur comme connexions bande haute fréquence communes (H15, H26, H37, H48) ;
dans le circuit bande de base (BBS) en mode émetteur, un premier signal à fréquence intermédiaire (IS, QS) est généré à partir d'un signal de communication (NS) et est transmis au circuit haute fréquence (HFS) et dans un mode récepteur, le signal de communication (NS) est obtenu à partir d'un deuxième signal à fréquence intermédiaire (IE, QE),
dans le circuit haute fréquence (HFS) en mode émetteur, le premier signal à fréquence intermédiaire (IS, QS) est converti sur une fréquence d'émission et en mode récepteur, le deuxième signal à fréquence intermédiaire (IE, QE) est obtenu à partir d'un signal reçu et est transmis au circuit bande de base (BBS),
le premier signal à fréquence intermédiaire (IS, QS), pendant des premières périodes (ZAS), et le deuxième signal à fréquence intermédiaire (IE, QE), pendant des deuxièmes périodes de temps (ZAE), sont transmis via un chemin de transmission (GP) commun respectif, les premières périodes de temps (ZAS) ne se chevauchant pas avec les deuxièmes périodes de temps (ZAE) ;
dans lequel le chemin de transmission (GP) commun respectif relie une première connexion (BP1-BP4) respective avec une deuxième connexion correspondante (HP1-HP4) sous la forme à chaque fois d'une ligne.

2. Procédé selon la revendication 1,
**caractérisé en ce que** le premier et le deuxième signal intermédiaire (IS, QS ; IE, QE) comprennent à chaque fois une composante en phase (IS, IE) et une composante en quadrature (OS, QE).

3. Procédé selon une des revendications 1 ou 2,
**caractérisé en ce que** les connexions (H1, ...,H8) du circuit haute fréquence (HFS), via lesquelles le premier et le deuxième signal intermédiaire (IS, QS ; IE, QE) sont conduits, sont sorties hors du circuit haute fréquence (HSS) et sont connectées en parallèle à l'extérieur du circuit haute fréquence (HSS).

4. Procédé selon une des revendications 1 ou 2,
**caractérisé en ce que** les connexions (B1, ...,B8) du circuit bande de base (BBS), via lesquelles le premier et le deuxième signal intermédiaire (IS, QS ; IE, QE) sont conduits, sont sorties hors du circuit bande de base (BBS) et sont connectées en parallèle à l'extérieur du circuit bande de base (BBS).

5. Procédé selon une des revendications 1 à 4,
**caractérisé en ce que** dans le circuit haute fréquence (HFS), le premier signal intermédiaire (IS, QS) est converti sur la fréquence d'émission avec au moins un mélangeur d'émission (BSS1) et le deuxième signal intermédiaire (IE, QE) est obtenu à partir du signal reçu avec au moins un mélangeur de réception (HES1).

6. Procédé selon une des revendications 1 à 5,
**caractérisé en ce que** dans le circuit bande de base (BBS), le premier signal intermédiaire (IS, QS) est généré au moyen d'une modulation numérique et le signal de communication (NS) est obtenu à partir du deuxième signal intermédiaire (IE, QE) au moyen d'un filtrage numérique.
